# EUROPEAN PATENT APPLICATION

(11) **EP 4 629 102 A1**
(43) Date of publication of application: **08.10.2025**
(21) Application number: 25165966.0
(22) Date of filing: 25.03.2025
(51) Int. Cl.: G06F 16/78

(54) **METHOD AND SYSTEM OF VISUALIZING COMPUTER ENVIRONMENT ARCHITECTURE**

(30) Priority: 01.04.2024 US 202418623510
(71) Applicant: Microsoft Technology Licensing, LLC, Redmond, WA 98052-6399 (US)
(72) Inventor: ANAND, Nishith, Redmond, Washington, 98052 (US); VAIDYA, Abhishek, Redmond, Washington, 98052 (US); CHOUDHARY, Akshansh, Redmond, Washington, 98052 (US)
(74) Representative: CMS Cameron McKenna Nabarro Olswang LLP

(57) **Abstract**

A method for automatically generating a real-time video related to a functionality of a computing environment includes providing a portal for users to submit a request for a video, where the request includes a correlation ID associated with the functionality of the environment. Based on the correlation ID, whether a video associated with the correlation ID is available and whether to retrieve metadata from the computing environment. Aggregated data representing flow of data or operations in one or more services is then generated from the retrieved metadata using a management service and transmitted to a video creation service that generates a video based on the aggregated data. The generated video depicts at least one of the flow of data or operations of one or more services. The video is stored in the video storage medium with the correlation ID for future use, and is provided for display.

## Description

### BACKGROUND

Today's computer environments include many complex engineering systems that may include multiple services (e.g., microservices) that interact with one other. Furthermore, most organizations have many engineering team members and/or software developers that develop the systems and/or are responsible for troubleshooting the systems, when issues arise. With the number of people involved in creation and/or management of these complex systems, many individuals move teams, leave the organization or join a new organization. Because of the complexity of the systems and the continuous change in the people who manage them, it is very difficult to retain knowledge about the internal workings of many complex computer environments. As a result, it is often challenging for a given on call engineer or developer to understand end to end workings of a computer environment's infrastructure. This results in the on-call engineers having to spend a long time identifying the cause of issues and determining how to address them, which results in longer downtimes. Furthermore, when a team member joins a new team or a new organization, it takes a long time to train and bring the new team member up to date as to the details of how the computer environment functions, which takes time and resources and often requires the expertise of more experienced engineers and team members.

Hence, there is a need for improved systems and methods of troubleshooting computer environments.

### SUMMARY

**In** one general aspect, the instant disclosure presents a data processing system having a processor and a memory in communication with the processor wherein the memory stores executable instructions that, when executed by the processor alone or in combination with other elements, cause the data processing system to perform multiple functions. The function may include receiving, via a portal, a request for viewing a video related to a computing environment, where the request includes a correlation ID and the computing environment includes a plurality of services. After receiving the request, based on the correlation ID it is determined that a video associated with the correlation ID is not available in a video storage medium. Upon determining that the video associated with the correlation ID is not available in the video storage medium, based on the correlation ID and via a management service, metadata associated with operations of one or more services of the computing environment is retrieved. From the retrieved metadata and using the management service, aggregated data is generated that represents at least one of flow of data in one or more of the plurality of services or operations of one or more of the plurality of services. The aggregated data is transmitted to a video creation service that generates a video based on the aggregated data, the generated video depicting at least one of the flow of data in the one or more of the plurality of services or the operations of the one or more of the plurality of services. The generated video is stored in the video storage medium with the correlation ID for future use and the generated video is provided for display.

In yet another general aspect, the instant disclosure presents a method for automatically generating a real-time video related to a functionality of a computing environment. In some implementations, the method includes providing a portal for users to submit a request for a video related to the functionality of the computing environment, the request including a correlation ID associated with the functionality and the computing environment including a plurality of services. Based on the correlation ID a determination is made that a video associated with the correlation ID is not available in a video storage medium. Upon determining that the video associated with the correlation ID is not available in the video storage medium, retrieving based on the correlation ID, via a management service, metadata from the computing environment. From the retrieved metadata and using the management service, aggregated data is generated that represents at least one of flow of data in one or more of the plurality of services or operations of one or more of the plurality of services. The aggregated data is transmitted to a video creation service that generates a video based on the aggregated data, the generated video depicting at least one of the flow of data in one or more of the plurality of services or the operations of one or more of the plurality of services. The generated video is stored in the video storage medium with the correlation ID for future use and is provided for display.

In a further general aspect, the instant application describes a non-transitory computer readable medium on which are stored instructions that when executed cause a programmable device to perform functions of receiving, via a portal, a request for a video related to a computing environment, the request including a correlation ID and the computing environment including a plurality of services. Based on the correlation ID, it is determined that a video associated with the correlation ID is not available in a video storage medium. Upon determining that the video associated with the correlation ID is not available in the video storage medium, retrieving based on the correlation ID, via a management service, metadata associated with operations of at least one of the plurality of services of the computing environment. From the retrieved metadata and using the management service, aggregated data is generated that represents at least one of flow of data in one or more of the plurality of services or operations of one or more of the plurality of services. The aggregated data is transmitted to a video creation service that generates a video based on the aggregated data, the generated video depicting at least one of the flow of data in one or more of the plurality of services or the operations of one or more of the plurality of services. The generated video is stored in the video storage medium with the correlation ID for future use and the generated video is provided for display.

A method for automatically generating a real-time video related to a functionality of a computing environment includes providing a portal for users to submit a request for a video related to the functionality of the computing environment, where the request includes a correlation ID associated with the functionality and the computing environment includes a plurality of services. Based on the correlation ID the method determines that a video associated with the correlation ID is not available in a video storage medium and upon this determination, metadata from the computing environment is retrieved. Aggregated data representing at least one of flow of data in one or more of the plurality of services or operations of one or more of the plurality of services is then generated from the retrieved metadata and using the management service, and transmitted to a video creation service that generates a video based on the aggregated data. The generated video depicts at least one of the flow of data in one or more of the plurality of services or the operations of one or more of the plurality of services. The video is stored in the video storage medium with the correlation ID for future use, and is provided for display.

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter. Furthermore, the claimed subject matter is not limited to implementations that solve any or all disadvantages noted in any part of this disclosure.

### BRIEF DESCRIPTION OF THE DRAWINGS

The drawing figures depict one or more implementations in accord with the present teachings, by way of example only, not by way of limitation. In the figures, like reference numerals refer to the same or similar elements. Furthermore, it should be understood that the drawings are not necessarily to scale.
FIG. 1 depicts an example system upon which aspects of this disclosure may be implemented.
FIG. 2 depicts an example data flow between some elements of an example system upon which aspects of this disclosure may be implemented.
FIGs. 3A-3B depict example GUI screens of an application or service that enables a user to generate or view a video about the end-to-end workings of a product, service or computing environment issue.
FIG. 4 is a flow diagram depicting an exemplary method for automatically generating a video related to a computing environment.
FIG. 5 is a block diagram illustrating an example software architecture, various portions of which may be used in conjunction with various hardware architectures herein described.
FIG. 6 is a block diagram illustrating components of an example machine configured to read instructions from a machine-readable medium and perform any of the features described herein.

### DETAILED DESCRIPTION

It is common in complex computer environments that include various services, for data to travel to various computing systems and services. For example, an organization that makes use of and/or offers for use multiple microservices, may enable the different microservices to exchange data. As a result, a given task or functionality of a service or application can involve complex exchange of data and/or performance of various tasks. Whiles these functionalities and complexities may be known to the developer who generates a given functionality, this knowledge is often not easily available to other team members or new team members. In a complex computer environment with numerous inner workings and complexities and large teams of developers and engineers, many details may be unknown to on-call engineers who manage and/or troubleshoot the system. To make matters more complicated, people often move in between teams and to/from organizations. When an experienced developer or on call engineer leaves a team, it is difficult to capture and retain all of their knowledge about the inner workings of the system. Furthermore, a new team member is often unaware of the complete microservice architecture. Team members may also be new to the code or to a given database and/or may be familiar with only a specific section of the architecture. Moreover, any available troubleshooting guides may not be up to date or properly documented. As a result, it is often very challenging for a given on call engineer to identify causes of issues and determine who to address them quickly. This results in unnecessary delays in troubleshooting computer system issues. Thus, there exists a technical problem in the current mechanisms for debugging computer environment systems of lack of easily accessible knowledge about the inner workings of various the environment's architecture. This results in the inability of on call engineers and developers to quickly and efficiently address production issues, which can result in unnecessary downtime and in efficient use of computing resources.

To address these technical problems and more, in an example, this description provides technical solutions for automatically generating a real-time video that illustrates data flow and/or flow of actions in the system, thus enabling an on call engineer to determine how to resolve production issues. This involves use of various elements that include a portal that enables a user such as an on call engineer to query about an issue (e.g., bug in a product in production), a management service that extracts metadata associated with the issue (e.g., product's operations related to the bug), a video creation service that generates a video using the extracted metadata, and use of a video storage medium that stores videos with associated correlation IDs. When a query is submitted, a determination may be made as to whether a video associated with the query already exists and displaying the video if the video is already available or generating the video in rea-time when a prior video related to the issue does not exist. The extracted metadata provides sufficient details about the data flow and/or flow of actions within the system to enable the video creation service to generate a video that visually depicts the inner workings of the system as it relates to a specific issue (e.g., specific bug or functionality). In this manner, the technical solution provides an automatic video generation service that quickly provides up to date knowledge about the end to end working of complex computer systems, as needed. This minimizes the amount of time and resources required to identify issues and determine how to address them, thus improving the functionality of the computer systems and increasing inefficiency in the use of complex computer environments.

As will be understood by persons of skill in the art upon reading this disclosure, benefits and advantages provided by such implementations can include, but are not limited to, a technical solution to the technical problems of lack of mechanisms for efficient and accurate troubleshooting of issues in complex computing environments such as microservice environments. The technical solutions enable automatic determination of the inner workings of a computer architecture as it relates a specific issue and/or functionality and generation of a video that visually depicts this inner working to quickly and efficiently enable a user to gain knowledge about the system. This not only reduces the amount of time and human resources needed to identify and address issues, it also results in faster and more accurate troubleshooting, thus improving the functionality of computer environments. In this manner, the technical solution improves the operation and efficiency of computer systems by enabling on call engineers to address production and/or other system issues in an efficient manner. The technical effects at least include (1) improving the functionality of computing environments by enabling efficient and accurate troubleshooting of problems in the environment; and (2) improving the efficiency of maintaining and obtaining up to update knowledge about the inner workings of computing environments; and (3) reducing the amount of bandwidth and computing resources required to generate videos by storing generated videos in an easily retrievable manner.

As used herein, the terms "application," "software application" or "service" may refer to any software program that provides options for performing various tasks or functionalities. The term "action," "functionality" or "task" refers to any command or action offered by an application for performing a task or functionality. Furthermore, the term "bug", "issue" or "problem" refers to any event that prevents a service from functioning as expected.

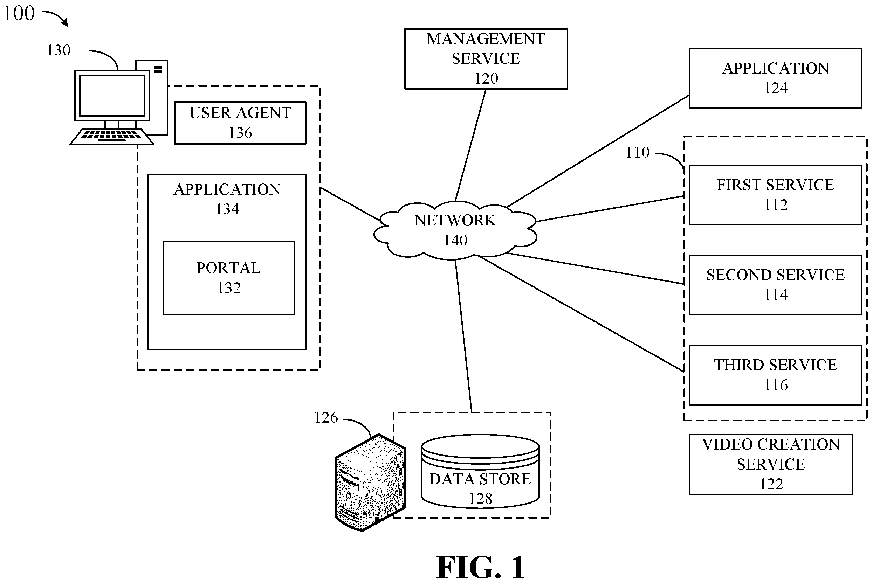

FIG. 1 illustrates an example system 100, upon which aspects of this disclosure may be implemented. The system 100 includes a computing environment 110 having a first service 112, second service 114 and third service 116. The system 100 also includes a management service 120, video creation service 122, application 124, storage server 126, and client device 130. Each of the services or applications shown may be stored on and/or executed by a server. The plurality of servers work together to deliver the functions and services provided by each system or application included in the servers.

The first service 112, second service 114 and third service 116 represent microservices or other services provided by the computing environment 110. These services may be cloud services or other types of applications (e.g., online applications or online services) that are accessible locally or via a network. Although three services are depicted in FIG. 1, any number of services may be available in the system. The services 112, 114 and 116 may exchange data and provide interconnected services and functionalities. The computing environment 110 may include one or more other elements of the system 100 (e.g., management service 120 or storage server 126). As the services 112, 114, 116 are executed in the computing environment, telemetry data about their functionalities is collected and stored in the computing environment 110 or in an external data store such as the data store 128.

The system 100 also includes the storage server 126 which may be connected to or include the data store 128 which functions as a repository in which databases relating to telemetry data, metadata and videos are stored. The data store 128 also represents the repository in which generated videos are stored. Although shown as a single data store, the data store 128 may be representative of multiple storage devices and data stores which may be accessible by one or more of the management service 120, video creation service 122 and applications 124/134.

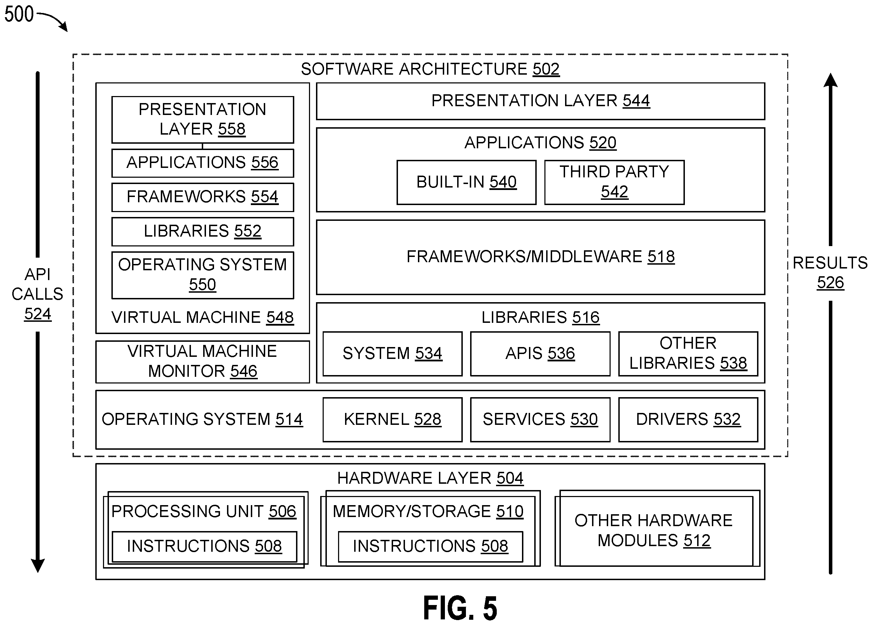

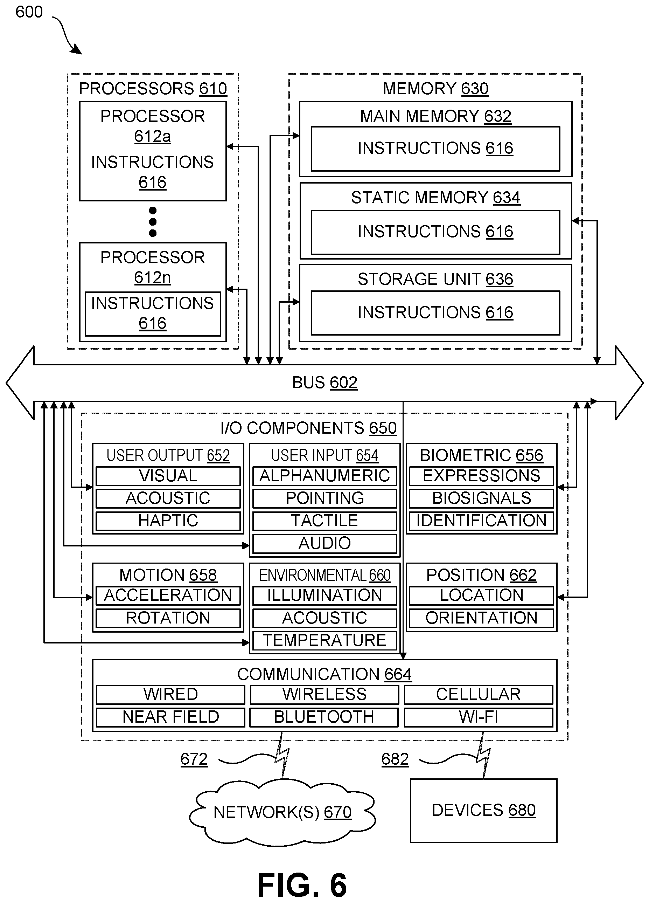

The client device 130 is connected to various elements of the system via a network 140. The network 140 may be a wired or wireless network(s) or a combination of wired and wireless networks that connect one or more elements of the system 100. The client device 130 may be a type of personal, business or handheld computing device having or being connected to input/output elements that enable a user to interact with various applications (e.g., application 124 or application 134) and/or services (e.g., first service 112, second service 114, third service 116 and management service 120). The client device 130 may be utilized by an on call engineer, developer or other administrator to submit a request for generating or viewing a video relating to a specific issue, functionality or system architecture. In response, the user may be presented with an automatically generated video which is generated in real-time or extracted from a video storage medium. Examples of suitable client devices 130 include but are not limited to personal computers, desktop computers, laptop computers, mobile telephones, smart phones, tablets, phablets, smart watches, wearable computers, gaming devices/computers, televisions; and the like. The internal hardware structure of a client device is discussed in greater detail with respect to FIGs. 5 and 6.

The client device 130 includes a local application 134. The application 134 is a software program executed on the client device that configures the device to be responsive to user input to allow a user to submit a request to generate/view a video related to the computing environment 110. The application 134 displays the portal 132 which provides a user interface (UI) that enables the user to submit a request. The query portal may include a UI element (e.g., a text box) for entering a correlation ID, based on which telemetry data can be collected and the video can be generated. In some examples, the application a user interacts with is an online application such as the application 124 and provided via an online service. In some implementations, web applications communicate via the network 140 with a user agent 136, such as a browser, executing on the client device 130. The user agent 136 provides a user interface (UI) that allows the user to interact with the application 124. As such, the user agent may display the query portal from which the request may be submitted.

To enable video generation, the management service 120 extracts telemetry data from the services provided by the computing environment 110. The extracted telemetry data may be stored as metadata in a data structure such as the data store 128. The video creation service 122 then utilizes the stored metadata to generate a video that depicts the flow of data, actions in the computing environment as it relates to the correlation ID provided by the user. The generated video is stored in a storage medium such as the storage server 126 and displayed via the application 134 and/or user agent 136.

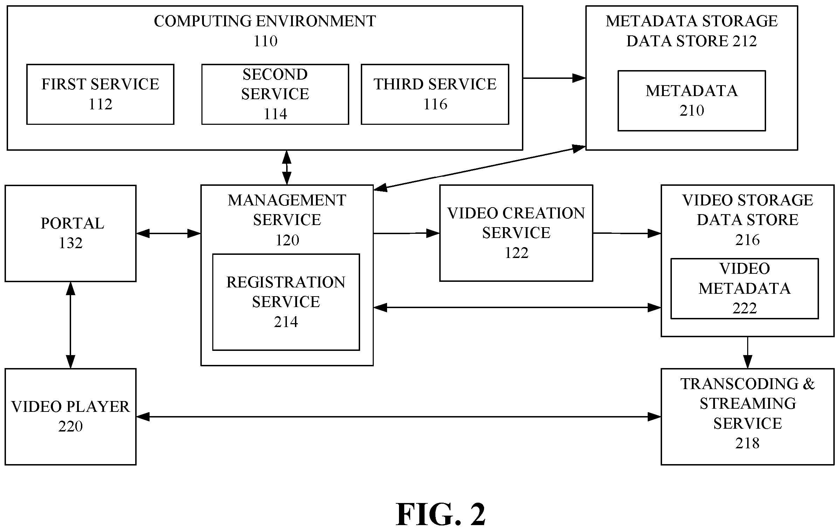

FIG. 2 depicts an example data flow between some elements of an example system upon which aspects of this disclosure may be implemented. As discussed above, the portal 132 provides a UI screen that enables users to submit a correlation ID for video generation/retrieval. The portal 132 may also display a video player 220 which can be used to play the video created by the video creation service 122. Upon receiving a user request via the portal 132, the application via which the request is received transmits the request to the management service 120. The request transmitted to the management service 120 includes the correlation ID submitted by the user.

The correlation ID is a unique identifier utilized by the computing environment 110 to identify data flow and/or actions associated with a session. In an example, when a new session is generated, the computing environment 110 (e.g., the service or application in the computing environment 110 from which the session started) generates a new correlation ID to assign to the session. This correlation ID is then transmitted with telemetry data collected during the session. The correlation ID may be generated by a component associated with the management service 120 which exists in each of the services of the computing environment 110 (e.g., services 112, 114 and 116). The component may be library that is added to each service of the computing environment 110, when the computing environment 110 or a new service within the computing environment 110 registers with the management service 120, as described in more details in the examples that follow. Once generated, the correlation ID is attached to telemetry data generated within the session associated with the correlation ID. Thus, all data related to the session can be easily identified with the correlation ID. The process of attaching the correlation ID to the telemetry data may simply involve adding the correlation ID to telemetry data each time new telemetry data is generated. As a session progresses (e.g., data flows through the system and/or various actions are performed), telemetry data is generated during various stages of the session (e.g., every time data is transferred, or an action is taken) and the correlation ID is added to each instance of the telemetry data. As a result, every end-to-end operation in the computing environment 110 may be associated with a unique a correlation ID.

The telemetry data associated with a given session is then transmitted as metadata 210 to the metadata storage data store 212 for storage and future retrieval. In some implementations, the telemetry data generated by the computing environment 110 is collected and stored as before, but the telemetry data is tagged with the correlation ID. This enables efficiently tagging and storing telemetry data, while enabling future retrieval by the management service 120 and/or video creation service 122.

The management service 120 is the service that orchestrates various aspects of visualizing data flow in the computing environment 110. The management service 120 includes a registration service 214, which helps the management service 120 determine which endpoints in the computing environment 110 to check for the flow of the correlation ID and keeps track of the end-to-end systems involved in the computing environment 110. The registration service 214 is also used to register each of the first service 112, second service 114 and third service 116 with the management service 120. To enable video creation, each service of the computing environment 110 which participates in the video creation process registers with the management service 120 via the registration service 214. The registration may occur when the computing environment 110 begins using the management service 120 and every time a new service is added to the computing environment 110 or a new service begins using the video creation services. The registration process may involve using of one or more application programming interfaces (APIs) and includes installing a component such as a library in each of the registered services, where the component is responsible for generating a correlation ID for each new session and attaching the correlation ID to telemetry data generated for that session. In this manner, the registration service enables registration for multiple services and binds the multiple registered services together such that the services coordinate use of the correlation IDs, if/when data is exchanged between the services. As a result, when the flow of information includes data flow across multiple services, the same correlation ID can be used to ensure the data flow is captured accurately for video creation. It should be noted that while the registration service 214 is displayed as part of the management service 120, the registration service may be a separate service that works with the management service to register services of the computing environment 110.

After the services have registered with the management service 120, the user can locate the correlation ID associated with a session of interest and transmit a request for video creation for that session. The user may be able locate the correlation ID by viewing telemetry logs, error logs or a log file associated with a browser. In an example, when there is an incident in a service, an error log is generated, and the correlation ID is included in the error log. The on call engineer handling the incident can then easily retrieve the correlation ID when reviewing the error log.

Once the request is received via the portal 132, the management service 120 is called by the portal 132 to request a video related to a correlation ID submitted with the request. The management service 120 first transmits a request to the video storage data store 216 to determine if a video associated with the correlation ID has already been generated. This is because, after a video is generated, it is stored in the video storage data store 216 for future use. A technical benefit of this approach is that once a video is generated it can be re-used multiple times by one or more developers and engineers, thus conserving the amount of computing resources required for creating the video every time there is a need for a video associated with a correlation ID. If the video already exists, then the management service 120 transmits information such as the location at which the video is stored (e.g., a link to the video) to the portal 132 such that the video can be displayed by the portal 132.

When the management service 120 determines that an already generated video does not exist for the correlation ID, the management service 120 retrieves information about the correlation ID from the metadata storage data store 212. This may involve transmitting a request to the metadata storage data store 212 to retrieve data from the metadata 210 that is associated with the correlation ID. The management service 120 then utilizes the metadata to determine which service generated the correlation ID and how data flowed in the service and/or in other services. The management service 120 may then aggregate information from all the services in which the correlation ID appears. This involves collecting the telemetry data and arranging the telemetry data in a chronological order. This may be achieved by utilizing a time entry (e.g., timestamp) associated with the collected telemetry data to arrange the data in a chronological order. The aggregated and arranged data is then provided by the management service 120 to the video creation service 122.

The video creation service 122 receives the metadata needed for video creation and automatically generates a video based on the metadata that depicts the flow of data/actions in the system during a given session. To achieve this, the video creation service 122 may utilize any automated video creator. The video creator may utilize artificial intelligence (AI) and/or other mechanisms to generate one or more flow diagrams, charts, text, and/or other images that are used to create a video that depicts the flow of data in the system. In an example, the video creation service 122 receives the arranged telemetry data as an input, utilizes the input data to generate flow diagrams or charts that depict the flow of data and then utilizes the generated diagrams to create a video that depicts a snapshot of the complete data flow even if it involves various systems, services and databases.

Once the video is created, the video creation service 122 transmits the video for storage to the video storage data store 216. In some implementations, the video storage data store 216 is a bulk data storage medium for storing videos. In addition to transmitting the video, the video creation service 122 may transmit metadata for each generated video. The metadata may include data about the video such as the size of the video, the type of the video, duration of the video, the correlation ID associated with the video, the time video was generated and the like. In an example, the video metadata database includes a list of videos generated for the computing environment 110. This may provide an index for a quick lookup of videos when needed and may include the correlation ID associated with the video and a link (e.g., URL) to the location at which the video is stored. When the new video is stored in the video storage data store 216, information associated with the video may be added to the video metadata database 210. The metadata is stored in a different database than the data store/database the video is stored in. The metadata enables quick lookup of the video, which can be used to determine if a video related to the correlation ID has already been generated.

Once the video is created and stored in the video storage data store 216, a message is transmitted to the management service 120 that includes information about the video. The information may include the link to the location at which the video is stored. The management service 120 then transmits the information to the portal 132. In some implementations, the portal 132 includes or operates with (e.g., via an API) the video player 220. The video player 220 may be any video player that can be used in an application page or browser to play videos and may include known video players.

In some implementations, the video player 220 transmits a request to the transcoding and streaming service 218 for transcoding and/or streaming the video. The transcoding and streaming service 218 is responsible for making the video available in a format required by the portal 132 and/or video player 220. This is because the video format may differ for different operation systems, application and/or clients. The transcoding and streaming service 218 receives information about the required format, transcodes the video to the required format, when it is in a different format and streams the video to the video player 220. When or if the transcoding and streaming service fails to transcode the video or in implementations where the transcoding and streaming service 218 is not used, the original video can be downloaded and played locally by the video player 220. In either case, the video can be played via the video player 220 which is made available via the portal 132. This enables the user that submitted the request to view the video directly from the portal from which the request was transmitted. In some implementations, the video is displayed in a different application and/or different UI screen.

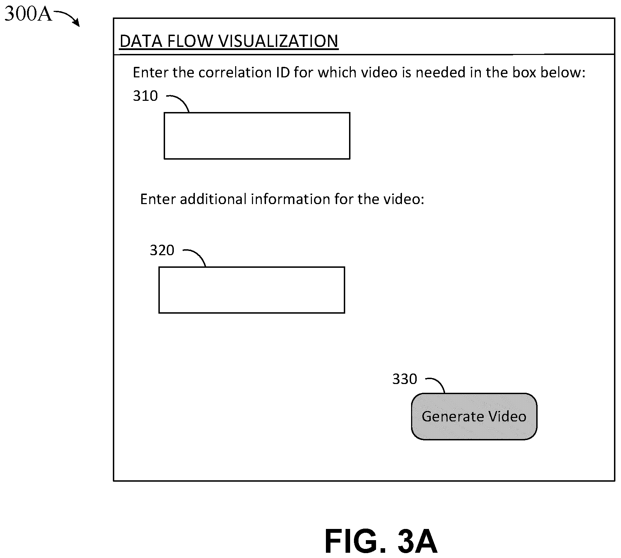

FIGs. 3A-3B depict example GUI screens of an application that provides a portal via which a user can submit a request for visualizing data flow and/or visualizing an aspect of a computer environment architecture. The GUI screen 300A displays an input box 310 that enables the user to insert the correlation ID for which the user desires to generate a video. As discussed above, the correlation ID may be retrieved from an error log associated with an incident and maybe provided by an incident management system. In other implementations, the correlation ID is retrieved from log files associated with events or telemetry data. In addition to the input box 310, the GUI screen 300A includes a UI element 330 for enabling the user to submit additional information about the user's request. In an example, the additional information includes content description type, product type, service type and any other information that would be needed to make the video more useful and interactive. In an example, the additional information helps the video creation service create different segments the divide the video into multiple chapters. To enable the user to enter multiple inputs, in some implementations, the GUI screen 300A includes multiple input boxes for providing additional information.

Once the user is done entering their input, they can select the UI element 330 to transmit a request for generating the video. As discussed above, after the request is received, a determination is made as to whether a video that corresponds to the user's request is already available in the system and if so, a new video is not generated. Instead, the link to the existing video is provided to the portal which uses a video player to display the video. When a video corresponding to the request is not available, then a video is generated based on the user's input (e.g., correlation ID and any additional information).

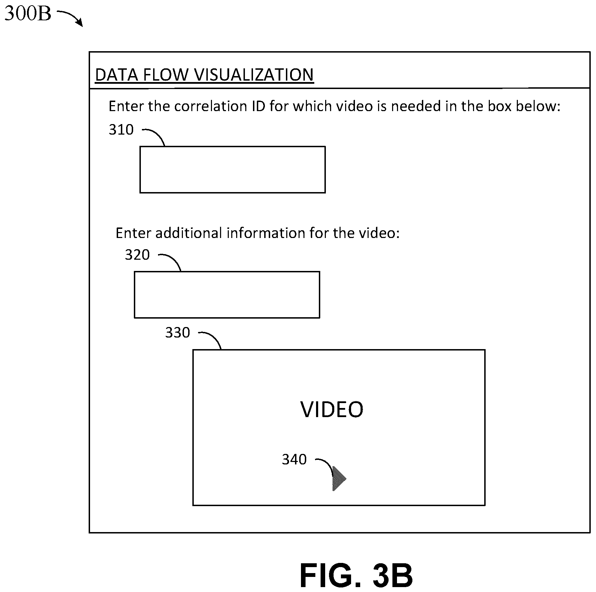

After the video is generated and/or retrieved, a preview of the video is displayed in the screen as depicted in GUI screen 300B of FIG. 3B. The preview is displayed in a video pane 340 of the screen 300B and may include an image from the video. The UI element 340 can be utilized to play the video. In some implementations, upon playing the video, additional UI elements are presented in the video pane 340 for pausing the video, rewinding the video or moving the video forward. In some implementations, the video is displayed in a different GUI screen or application. For example, upon the user transmitting the request for video generation and once the video is generated/retrieved, a UI element may be displayed that notifies the user that the video is ready and enables the user to open a video player to play the video. The video player may be selectable by the user or may be pre-selected. In this manner, the user is provided with quick and comprehensive information about the inner workings of the system as it relates to a specific correlation ID. By displaying the data flow in a video format, the solution presented herein provides an easily understandable overview of the system and helps the user identify the causes of the issue, thus enabling the user to quickly identify solutions.

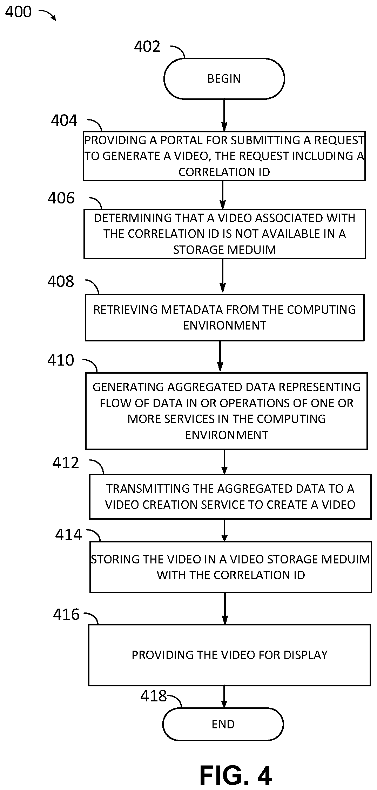

FIG. 4 is a flow diagram depicting an exemplary method 400 for automatically generating a video related to a functionality of a computing environment. One or more steps of the method 400 may be performed by a management system such as the management service 120 of FIGs. 1 and 2. Other steps of the method 400 may be performed by a video creation service such as the video creation service 122 of FIGs. 1 and 2, by a portal such as the portal 132 of FIGs. 1 and 2 and/or by a video player such as the video player 220 of FIG. 2.

Method 400 begins, at 402, and proceeds to provide a portal for users to submit a request for generating/retrieving a video related to the functionality of the computing environment, at 404. The request includes a correlation ID associated with the functionality and is provided by the user submitting the request. The computing environment includes a plurality of services that are registered with a management service. As part of the registration, the registered services install a component that is configured to generate a correlation ID when a new session is initiated via the registered service. The services utilize this correlation ID to tag telemetry data generated during the session with the correlation ID.

After receiving the request, method 400 proceeds to determine, based on the correlation ID that a video associated with the correlation ID is not available in a video storage medium, at 406. This may involve transmitting the request to the management service which utilizes the correlation ID to search a metadata database of generated videos to determine if a video associated with the correlation ID has already been generated. When it is determined that a video associated with the correlation ID is not available in the video storage medium, method 400 proceeds to retrieve metadata from the computing environment based on the correlation ID, at 408. The metadata is retrieved via the management service from a metadata storage medium.

Once the metadata is retrieved, method 400 proceeds to generate from the retrieved metadata and using the management service, aggregated data representing either a flow of data in one or more of the plurality of services or operations of one or more of the plurality of services, at 410. After the data is aggregated, it is transmitted to the video creation service, at 412. The video creation service is a service that generates a video based on the aggregated data, where the generated video depicts at least one of the flow of data in one or more of the plurality of services or the operations of one or more of the plurality of services.

The generated video along with metadata about the generated video are transmitted to a storage medium. The generated video is then stored at the video storage medium with the correlation ID for future use, at 414. Storing the generated video may include storing metadata about the video in a video metadata database, where the metadata includes the correlation ID, a location at which the video is stored and/or other information about the video. The video is then provided for display, at 416, before method 400 ends, at 418.

FIG. 5 is a block diagram 500 illustrating an example software architecture 502, various portions of which may be used in conjunction with various hardware architectures herein described, which may implement any of the above-described features. FIG. 5 is a non-limiting example of a software architecture, and it will be appreciated that many other architectures may be implemented to facilitate the functionality described herein. The software architecture 502 may execute on hardware such as client devices, native application provider, web servers, server clusters, external services, and other servers. A representative hardware layer 504 includes a processing unit 506 and associated executable instructions 508. The executable instructions 508 represent executable instructions of the software architecture 502, including implementation of the methods, modules and so forth described herein.

The hardware layer 504 also includes a memory/storage 510, which also includes the executable instructions 508 and accompanying data. The hardware layer 504 may also include other hardware modules 512. Instructions 508 held by processing unit 506 may be portions of instructions 508 held by the memory/storage 510.

The example software architecture 502 may be conceptualized as layers, each providing various functionality. For example, the software architecture 502 may include layers and components such as an operating system (OS) 514, libraries 516, frameworks 518, applications 520, and a presentation layer 544. Operationally, the applications 520 and/or other components within the layers may invoke API calls 524 to other layers and receive corresponding results 526. The layers illustrated are representative in nature and other software architectures may include additional or different layers. For example, some mobile or special purpose operating systems may not provide the frameworks/middleware 518.

The OS 514 may manage hardware resources and provide common services. The OS 514 may include, for example, a kernel 528, services 530, and drivers 532. The kernel 528 may act as an abstraction layer between the hardware layer 504 and other software layers. For example, the kernel 528 may be responsible for memory management, processor management (for example, scheduling), component management, networking, security settings, and so on. The services 530 may provide other common services for the other software layers. The drivers 532 may be responsible for controlling or interfacing with the underlying hardware layer 504. For instance, the drivers 532 may include display drivers, camera drivers, memory/storage drivers, peripheral device drivers (for example, via Universal Serial Bus (USB)), network and/or wireless communication drivers, audio drivers, and so forth depending on the hardware and/or software configuration.

The libraries 516 may provide a common infrastructure that may be used by the applications 520 and/or other components and/or layers. The libraries 516 typically provide functionality for use by other software modules to perform tasks, rather than rather than interacting directly with the OS 514. The libraries 516 may include system libraries 534 (for example, C standard library) that may provide functions such as memory allocation, string manipulation, file operations. In addition, the libraries 516 may include API libraries 536 such as media libraries (for example, supporting presentation and manipulation of image, sound, and/or video data formats), graphics libraries (for example, an OpenGL library for rendering 2D and 3D graphics on a display), database libraries (for example, SQLite or other relational database functions), and web libraries (for example, WebKit that may provide web browsing functionality). The libraries 516 may also include a wide variety of other libraries 538 to provide many functions for applications 520 and other software modules.

The frameworks 518 (also sometimes referred to as middleware) provide a higher-level common infrastructure that may be used by the applications 520 and/or other software modules. For example, the frameworks 518 may provide various graphic user interface (GUI) functions, high-level resource management, or high-level location services. The frameworks 518 may provide a broad spectrum of other APIs for applications 520 and/or other software modules.

The applications 520 include built-in applications 540 and/or third-party applications 542. Examples of built-in applications 540 may include, but are not limited to, a contacts application, a browser application, a location application, a media application, a messaging application, and/or a game application. Third-party applications 542 may include any applications developed by an entity other than the vendor of the particular system. The applications 520 may use functions available via OS 514, libraries 516, frameworks 518, and presentation layer 544 to create user interfaces to interact with users.

Some software architectures use virtual machines, as illustrated by a virtual machine 548. The virtual machine 548 provides an execution environment where applications/modules can execute as if they were executing on a hardware machine (such as the machine depicted in block diagram 600 of FIG. 6, for example). The virtual machine 548 may be hosted by a host OS (for example, OS 514) or hypervisor, and may have a virtual machine monitor 546 which manages operation of the virtual machine 548 and interoperation with the host operating system. A software architecture, which may be different from software architecture 502 outside of the virtual machine, executes within the virtual machine 548 such as an OS 550, libraries 552, frameworks 554, applications 556, and/or a presentation layer 558.

FIG. 6 is a block diagram illustrating components of an example machine 600 configured to read instructions from a machine-readable medium (for example, a machine-readable storage medium) and perform any of the features described herein. The example machine 600 is in a form of a computer system, within which instructions 616 (for example, in the form of software components) for causing the machine 600 to perform any of the features described herein may be executed. As such, the instructions 616 may be used to implement methods or components described herein. The instructions 616 cause unprogrammed and/or unconfigured machine 600 to operate as a particular machine configured to carry out the described features. The machine 600 may be configured to operate as a standalone device or may be coupled (for example, networked) to other machines. In a networked deployment, the machine 600 may operate in the capacity of a server machine or a client machine in a server-client network environment, or as a node in a peer-to-peer or distributed network environment. Machine 600 may be embodied as, for example, a server computer, a client computer, a personal computer (PC), a tablet computer, a laptop computer, a netbook, a set-top box (STB), a gaming and/or entertainment system, a smart phone, a mobile device, a wearable device (for example, a smart watch), and an Internet of Things (IoT) device. Further, although only a single machine 600 is illustrated, the term "machine" includes a collection of machines that individually or jointly execute the instructions 616.

The machine 600 may include processors 610, memory 630, and I/O components 650, which may be communicatively coupled via, for example, a bus 602. The bus 602 may include multiple buses coupling various elements of machine 600 via various bus technologies and protocols. In an example, the processors 610 (including, for example, a central processing unit (CPU), a graphics processing unit (GPU), a digital signal processor (DSP), an ASIC, or a suitable combination thereof) may include one or more processors 612a to 612n that may execute the instructions 616 and process data. In some examples, one or more processors 610 may execute instructions provided or identified by one or more other processors 610. The term "processor" includes a multi-core processor including cores that may execute instructions contemporaneously. Although FIG. 6 shows multiple processors, the machine 600 may include a single processor with a single core, a single processor with multiple cores (for example, a multi-core processor), multiple processors each with a single core, multiple processors each with multiple cores, or any combination thereof. In some examples, the machine 600 may include multiple processors distributed among multiple machines.

The memory/storage 630 may include a main memory 632, a static memory 634, or other memory, and a storage unit 636, both accessible to the processors 610 such as via the bus 602. The storage unit 636 and memory 632, 634 store instructions 616 embodying any one or more of the functions described herein. The memory/storage 630 may also store temporary, intermediate, and/or long-term data for processors 610. The instructions 616 may also reside, completely or partially, within the memory 632, 634, within the storage unit 636, within at least one of the processors 610 (for example, within a command buffer or cache memory), within memory at least one of I/O components 650, or any suitable combination thereof, during execution thereof. Accordingly, the memory 632, 634, the storage unit 636, memory in processors 610, and memory in I/O components 650 are examples of machine-readable media.

As used herein, "machine-readable medium" refers to a device able to temporarily or permanently store instructions and data that cause machine 600 to operate in a specific fashion. The term "machine-readable medium," as used herein, does not encompass transitory electrical or electromagnetic signals per se (such as on a carrier wave propagating through a medium); the term "machine-readable medium" may therefore be considered tangible and non-transitory. Non-limiting examples of a non-transitory, tangible machine-readable medium may include, but are not limited to, nonvolatile memory (such as flash memory or read-only memory (ROM)), volatile memory (such as a static random-access memory (RAM) or a dynamic RAM), buffer memory, cache memory, optical storage media, magnetic storage media and devices, network-accessible or cloud storage, other types of storage, and/or any suitable combination thereof. The term "machine-readable medium" applies to a single medium, or combination of multiple media, used to store instructions (for example, instructions 616) for execution by a machine 600 such that the instructions, when executed by one or more processors 610 of the machine 600, cause the machine 600 to perform and one or more of the features described herein. Accordingly, a "machine-readable medium" may refer to a single storage device, as well as "cloud-based" storage systems or storage networks that include multiple storage apparatus or devices.

The I/O components 650 may include a wide variety of hardware components adapted to receive input, provide output, produce output, transmit information, exchange information, capture measurements, and so on. The specific I/O components 650 included in a particular machine will depend on the type and/or function of the machine. For example, mobile devices such as mobile phones may include a touch input device, whereas a headless server or IoT device may not include such a touch input device. The particular examples of I/O components illustrated in FIG. 6 are in no way limiting, and other types of components may be included in machine 600. The grouping of I/O components 650 are merely for simplifying this discussion, and the grouping is in no way limiting. In various examples, the I/O components 650 may include user output components 652 and user input components 654. User output components 652 may include, for example, display components for displaying information (for example, a liquid crystal display (LCD) or a projector), acoustic components (for example, speakers), haptic components (for example, a vibratory motor or force-feedback device), and/or other signal generators. User input components 654 may include, for example, alphanumeric input components (for example, a keyboard or a touch screen), pointing components (for example, a mouse device, a touchpad, or another pointing instrument), and/or tactile input components (for example, a physical button or a touch screen that provides location and/or force of touches or touch gestures) configured for receiving various user inputs, such as user commands and/or selections.

In some examples, the I/O components 650 may include biometric components 656, motion components 658, environmental components 660 and/or position components 662, among a wide array of other environmental sensor components. The biometric components 656 may include, for example, components to detect body expressions (for example, facial expressions, vocal expressions, hand or body gestures, or eye tracking), measure biosignals (for example, heart rate or brain waves), and identify a person (for example, via voice-, retina-, and/or facial-based identification). The position components 662 may include, for example, location sensors (for example, a Global Position System (GPS) receiver), altitude sensors (for example, an air pressure sensor from which altitude may be derived), and/or orientation sensors (for example, magnetometers). The motion components 658 may include, for example, motion sensors such as acceleration and rotation sensors. The environmental components 660 may include, for example, illumination sensors, acoustic sensors and/or temperature sensors.

The I/O components 650 may include communication components 664, implementing a wide variety of technologies operable to couple the machine 600 to network(s) 670 and/or device(s) 680 via respective communicative couplings 672 and 682. The communication components 664 may include one or more network interface components or other suitable devices to interface with the network(s) 670. The communication components 664 may include, for example, components adapted to provide wired communication, wireless communication, cellular communication, Near Field Communication (NFC), Bluetooth communication, Wi-Fi, and/or communication via other modalities. The device(s) 680 may include other machines or various peripheral devices (for example, coupled via USB).

In some examples, the communication components 664 may detect identifiers or include components adapted to detect identifiers. For example, the communication components 664 may include Radio Frequency Identification (RFID) tag readers, NFC detectors, optical sensors (for example, one- or multi-dimensional bar codes, or other optical codes), and/or acoustic detectors (for example, microphones to identify tagged audio signals). In some examples, location information may be determined based on information from the communication components 664, such as, but not limited to, geo-location via Internet Protocol (IP) address, location via Wi-Fi, cellular, NFC, Bluetooth, or other wireless station identification and/or signal triangulation.

While various embodiments have been described, the description is intended to be exemplary, rather than limiting, and it is understood that many more embodiments and implementations are possible that are within the scope of the embodiments. Although many possible combinations of features are shown in the accompanying figures and discussed in this detailed description, many other combinations of the disclosed features are possible. Any feature of any embodiment may be used in combination with or substituted for any other feature or element in any other embodiment unless specifically restricted. Therefore, it will be understood that any of the features shown and/or discussed in the present disclosure may be implemented together in any suitable combination. Accordingly, the embodiments are not to be restricted except in light of the attached claims and their equivalents. Also, various modifications and changes may be made within the scope of the attached claims.

In the foregoing detailed description, numerous specific details are set forth by way of examples in order to provide a thorough understanding of the relevant teachings. It will be apparent to persons of ordinary skill, upon reading this description, that various aspects can be practiced without such details. In other instances, well known methods, procedures, components, and/or circuitry have been described at a relatively high-level, without detail, in order to avoid unnecessarily obscuring aspects of the present teachings.

Generally, functions described herein (for example, the features illustrated in FIGS. 1-5) can be implemented using software, firmware, hardware (for example, fixed logic, finite state machines, and/or other circuits), or a combination of these implementations. In the case of a software implementation, program code performs specified tasks when executed on a processor (for example, a CPU or CPUs). The program code can be stored in one or more machine-readable memory devices. The features of the techniques described herein are system-independent, meaning that the techniques may be implemented on a variety of computing systems having a variety of processors. For example, implementations may include an entity (for example, software) that causes hardware to perform operations, e.g., processors functional blocks, and so on. For example, a hardware device may include a machine-readable medium that may be configured to maintain instructions that cause the hardware device, including an operating system executed thereon and associated hardware, to perform operations. Thus, the instructions may function to configure an operating system and associated hardware to perform the operations and thereby configure or otherwise adapt a hardware device to perform functions described above. The instructions may be provided by the machine-readable medium through a variety of different configurations to hardware elements that execute the instructions.

In an aspect, the technology relates to data processing system comprising: a processor; and a memory in communication with the processor, the memory comprising executable instructions that, when executed by the processor alone or in combination with other elements, cause the data processing system to perform functions of: receiving, via a portal, a request for viewing a video related to a computing environment, the request including a correlation ID and the computing environment including a plurality of services; determining, based on the correlation ID that a video associated with the correlation ID is not available in a video storage medium; upon determining that the video associated with the correlation ID is not available in the video storage medium, retrieving based on the correlation ID, via a management service, metadata associated with operations of at least one of the plurality of services of the computing environment; generating from the retrieved metadata and using the management service, aggregated data representing at least one of flow of data in one or more of the plurality of services or operations of one or more of the plurality of services; transmitting the aggregated data to a video creation service that generates a video based on the aggregated data, the generated video depicting at least one of the flow of data in the one or more of the plurality of services or the operations of the one or more of the plurality of services; storing the generated video in the video storage medium with the correlation ID for future use; and providing the generated video for display.

In an example, the generated video is stored with the correlation ID so that a future request with the correlation ID is provided with the generated video.

In an example, storing the generated video in the video storage medium with the correlation ID includes storing metadata about the generated video in a video metadata database, the video metadata database including the correlation ID for each video stored in the video storage medium.

In an example, correlation ID is associated with an error in the computing environment.

In an example, the correlation ID is included in an error log generated in response to an error in the computing environment.

In an example, providing the generated video for display includes: transmitting a link to a location at which the generated video is stored; utilizing a video player to play the generated video; and utilizing a transcoding and streaming service to transcode the video to a required format before the video player plays the video.

In an example, the metadata associated with operations of at least one of the plurality of services of the computing environment is retrieved from a metadata storage data store.

In an example, at least one of the plurality of services of the computing environment is registered with the management service.

In an example, registered services include a component that generates a new correlation ID when a new session is initiated.

In an example, the new correlation ID is added to telemetry data associated with the new session.

In an aspect, the technology relates to A method for automatically generating a real-time video related to a functionality of a computing environment, the method comprised of: providing a portal for users to submit a request for a video related to the functionality of the computing environment, the request including a correlation ID associated with the functionality and the computing environment including a plurality of services; determining, based on the correlation ID that a video associated with the correlation ID is not available in a video storage medium; upon determining that the video associated with the correlation ID is not available in the video storage medium, retrieving based on the correlation ID, via a management service, metadata from the computing environment; generating from the retrieved metadata and using the management service, aggregated data representing at least one of flow of data in one or more of the plurality of services or operations of one or more of the plurality of services; transmitting the aggregated data to a video creation service that generates a video based on the aggregated data, the generated video depicting at least one of the flow of data in one or more of the plurality of services or the operations of one or more of the plurality of services; storing the generated video in the video storage medium with the correlation ID for future use; and providing the generated video for display.

In an example, the generated video is stored with the correlation ID so that a future request with the correlation ID is provided with the generated video.

In an example, storing the generated video in the video storage medium with the correlation ID includes storing metadata about the generated video in a video metadata database, the video metadata database including the correlation ID for each video stored in the video storage medium.

In an example, providing the generated video for display includes: transmitting a link to a location at which the generated video is stored to the portal; and utilizing a video player to play the generated video.

In an example, a transcoding and streaming service is utilized to transcode the video to a required format before the video player plays the video.

In an example, the management service utilizes a registration service to register at least one of the plurality of services with the management service.

In an example, upon registration with the registration service, the registered service includes a component that generates a new correlation ID when a new session is initiated via the registered service.

In an example, the plurality of services register with the registration service and upon registration the plurality of services utilize correlation IDs to tag telemetry data associated with one or more sessions.

In an aspect, A non-transitory computer readable medium on which are stored instructions that, when executed, cause a programmable device to perform functions of: receiving, via a portal, a request for a video related to a computing environment, the request including a correlation ID and the computing environment including a plurality of services; determining, based on the correlation ID that a video associated with the correlation ID is not available in a video storage medium; upon determining that the video associated with the correlation ID is not available in the video storage medium, retrieving based on the correlation ID, via a management service, metadata associated with operations of at least one of the plurality of services of the computing environment; generating from the retrieved metadata and using the management service, aggregated data representing at least one of flow of data in one or more of the plurality of services or operations of one or more of the plurality of services; transmitting the aggregated data to a video creation service that generates a video based on the aggregated data, the generated video depicting at least one of the flow of data in one or more of the plurality of services or the operations of one or more of the plurality of services; storing the generated video in the video storage medium with the correlation ID for future use; and providing the generated video for display.

In an example, the generated video is stored with the correlation ID so that a future request with the correlation ID is provided with the generated video.

While the foregoing has described what are considered to be the best mode and/or other examples, it is understood that various modifications may be made therein and that the subject matter disclosed herein may be implemented in various forms and examples, and that the teachings may be applied in numerous applications, only some of which have been described herein. It is intended by the following claims to claim any and all applications, modifications and variations that fall within the true scope of the present teachings.

Unless otherwise stated, all measurements, values, ratings, positions, magnitudes, sizes, and other specifications that are set forth in this specification, including in the claims that follow, are approximate, not exact. They are intended to have a reasonable range that is consistent with the functions to which they relate and with what is customary in the art to which they pertain.

The scope of protection is limited solely by the claims that now follow. That scope is intended and should be interpreted to be as broad as is consistent with the ordinary meaning of the language that is used in the claims when interpreted in light of this specification and the prosecution history that follows, and to encompass all structural and functional equivalents. Notwithstanding, none of the claims are intended to embrace subject matter that fails to satisfy the requirement of Sections 101, 102, or 103 of the Patent Act, nor should they be interpreted in such a way. Any unintended embracement of such subject matter is hereby disclaimed.

Except as stated immediately above, nothing that has been stated or illustrated is intended or should be interpreted to cause a dedication of any component, step, feature, object, benefit, advantage, or equivalent to the public, regardless of whether it is or is not recited in the claims.

It will be understood that the terms and expressions used herein have the ordinary meaning as is accorded to such terms and expressions with respect to their corresponding respective areas of inquiry and study except where specific meanings have otherwise been set forth herein.

Relational terms such as first and second and the like may be used solely to distinguish one entity or action from another without necessarily requiring or implying any actual such relationship or order between such entities or actions. The terms "comprises," "comprising," and any other variation thereof, are intended to cover a non-exclusive inclusion, such that a process, method, article, or apparatus that comprises a list of elements does not include only those elements but may include other elements not expressly listed or inherent to such process, method, article, or apparatus. An element preceded by "a" or "an" does not, without further constraints, preclude the existence of additional identical elements in the process, method, article, or apparatus that comprises the element.

The Abstract of the Disclosure is provided to allow the reader to quickly identify the nature of the technical disclosure. It is submitted with the understanding that it will not be used to interpret or limit the scope or meaning of the claims. In addition, in the foregoing Detailed Description, it can be seen that various features are grouped together in various examples for the purpose of streamlining the disclosure. This method of disclosure is not to be interpreted as reflecting an intention that any claim requires more features than the claim expressly recites. Rather, as the following claims reflect, inventive subject matter lies in less than all features of a single disclosed example. Thus, the following claims are hereby incorporated into the Detailed Description, with each claim standing on its own as a separately claimed subject matter.

## Claims

1. A data processing system (600) comprising:
a processor (610); and
a memory (630) in communication with the processor, the memory comprising executable instructions (616) that, when executed by the processor alone or in combination with other elements, cause the data processing system to perform functions of:
receiving, via a portal (132), a request for viewing a video related to a computing environment (110), the request including a correlation ID and the computing environment including a plurality of services (112, 114, 116);
determining, based on the correlation ID that a video associated with the correlation ID is not available in a video storage medium (216);
upon determining that the video associated with the correlation ID is not available in the video storage medium, retrieving based on the correlation ID, via a management service (120), metadata associated with operations of at least one of the plurality of services of the computing environment;
generating from the retrieved metadata (210) and using the management service, aggregated data representing at least one of flow of data in one or more of the plurality of services or operations of one or more of the plurality of services;
transmitting the aggregated data to a video creation service (122) that generates a video based on the aggregated data, the generated video depicting at least one of the flow of data in the one or more of the plurality of services or the operations of the one or more of the plurality of services;
storing the generated video in the video storage medium with the correlation ID for future use; and
providing the generated video for display.

2. The data processing system of claim 1, wherein the generated video is stored with the correlation ID so that a future request with the correlation ID is provided with the generated video.

3. The data processing system of any of claims 1 or 2, wherein storing the generated video in the video storage medium with the correlation ID includes storing metadata about the generated video in a video metadata database (222), the video metadata database including the correlation ID for each video stored in the video storage medium.

4. The data processing system of any preceding claim, wherein correlation ID is associated with an error in the computing environment.

5. The data processing system of claim 4, wherein the correlation ID is included in an error log generated in response to an error in the computing environment.

6. The data processing system of any preceding claim, wherein providing the generated video for display includes:
transmitting a link to a location at which the generated video is stored;
utilizing a video player (220) to play the generated video; and
utilizing a transcoding and streaming service (218) to transcode the video to a required format before the video player plays the video.

7. The data processing system of any preceding claim, wherein the metadata associated with operations of at least one of the plurality of services of the computing environment is retrieved from a metadata storage data store (222).

8. The data processing system of any preceding claim, wherein at least one of the plurality of services of the computing environment is registered with the management service.

9. The data processing system of claim 8, wherein registered services include a component that generates a new correlation ID when a new session is initiated.

10. The data processing system of claim 9, wherein the new correlation ID is added to telemetry data associated with the new session.

11. A method for automatically generating a real-time video related to a functionality of a computing environment (110), the method comprised of:
providing a portal (132) for users to submit a request for a video related to the functionality of the computing environment, the request including a correlation ID associated with the functionality and the computing environment including a plurality of services (112, 114, 116);
determining, based on the correlation ID that a video associated with the correlation ID is not available in a video storage medium (216);
upon determining that the video associated with the correlation ID is not available in the video storage medium, retrieving based on the correlation ID, via a management service (120), metadata from the computing environment;
generating from the retrieved metadata and using the management service, aggregated data representing at least one of flow of data in one or more of the plurality of services or operations of one or more of the plurality of services;
transmitting the aggregated data to a video creation service (122) that generates a video based on the aggregated data, the generated video depicting at least one of the flow of data in one or more of the plurality of services or the operations of one or more of the plurality of services;
storing the generated video in the video storage medium with the correlation ID for future use; and
providing the generated video for display.

12. The method of claim 11, wherein the generated video is stored with the correlation ID so that a future request with the correlation ID is provided with the generated video.

13. The method of any of claims 11 or 12, wherein storing the generated video in the video storage medium with the correlation ID includes storing metadata about the generated video in a video metadata database (222), the video metadata database including the correlation ID for each video stored in the video storage medium.

14. The method of any of claims 11-13, wherein providing the generated video for display includes:
transmitting a link to a location at which the generated video is stored to the portal; and
utilizing a video player (220) to play the generated video.

15. A computer readable medium (630) on which are stored instructions that, when executed, cause a programmable device (600) to perform the method of any of claims 11-14.
